(19) Europäisches Patentamt
European Patent Office
Office européen des brevets

(11) **EP 2 859 497 B1**

(12) **FASCICULE DE BREVET EUROPEEN**

(45) Date de publication et mention
de la délivrance du brevet:
**29.07.2020 Bulletin 2020/31**

(21) Numéro de dépôt: **13727261.3**

(22) Date de dépôt: **06.05.2013**

(51) Int Cl.:
*G06F 21/77* (2013.01)        *G06F 21/57* (2013.01)
*G06F 21/64* (2013.01)        *H04L 9/08* (2006.01)
*H04L 9/32* (2006.01)        *G09C 1/00* (2006.01)

(86) Numéro de dépôt international:
**PCT/FR2013/051004**

(87) Numéro de publication internationale:
**WO 2013/186451 (19.12.2013 Gazette 2013/51)**

(54) **PROCEDE DE SAUVEGARDE DE DONNEES A L'EXTERIEUR D'UN MICROCIRCUIT SECURISE**

VERFAHREN ZUR SICHERSTELLUNG VON DATEN AUSSERHALB EINER SICHEREN MIKROSCHALTUNG

METHOD FOR BACKING-UP DATA OUTSIDE OF A SECURE MICROCIRCUIT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **12.06.2012 FR 1201677**

(43) Date de publication de la demande:
**15.04.2015 Bulletin 2015/16**

(73) Titulaire: **Rambus Inc.**
**Sunnyvale, CA 94089 (US)**

(72) Inventeurs:
• **DUPAQUIS, Vincent**
**F-13120 Biver (FR)**
• **VENELLI, Alexandre**
**31400 Toulouse (FR)**

(74) Mandataire: **de Roquemaurel, Bruno et al**
**OMNIPAT**
**24 Place des Martyrs de la Résistance**
**13100 Aix en Provence (FR)**

(56) Documents cités:
**EP-A1- 2 343 662    WO-A1-2009/156302**

• **DRIES SCHELLEKENS ET AL: "Embedded Trusted Computing with Authenticated Non-volatile Memory", 11 mars 2008 (2008-03-11), TRUSTED COMPUTING - CHALLENGES AND APPLICATIONS; [LECTURE NOTES IN COMPUTER SCIENCE], SPRINGER BERLIN HEIDELBERG, BERLIN, HEIDELBERG, PAGE(S) 60 - 74, XP019089490, ISBN: 978-3-540-68978-2 sections 1, 2.2 and 3.2-3.4**

**Description**

La présente invention concerne généralement les microcircuits sécurisés tels que ceux qui sont intégrés dans des cartes à puce, et les objets portables tels que les téléphones mobiles, les tablettes et les ordinateurs portables, intégrant de telles cartes à puce.

La présente invention s'applique notamment aux cartes à puces permettant de sécuriser des transactions sensibles telles que des transactions de paiement ou d'accès à un service, à contact ou à distance, par exemple à champ proche NFC (Near Field Communication) ou Bluetooth.

Les microcircuits comprennent généralement un processeur et une mémoire non volatile réinscriptible pour mémoriser notamment le programme exécuté par le processeur et des données à conserver entre deux transactions. Cette mémoire non volatile, généralement de type EEPROM ou Flash, est relativement coûteuse à fabriquer, comparativement au processeur, et occupe une surface importante du microcircuit ou fait intervenir des techniques de fabrication spécifiques.

Il peut donc être souhaitable de proposer un microcircuit sans mémoire non volatile réinscriptible ou avec une telle mémoire non volatile, mais de faible capacité, c'est-à-dire insuffisante pour y mémoriser le programme d'exploitation ("operating system") exécuté par le processeur du microcircuit, et des données devant être conservées lorsque le microcircuit est mis hors tension. Les programmes et données devant être conservés peuvent être stockés à l'extérieur du microcircuit, par exemple dans une mémoire non volatile du dispositif dans lequel est intégré le microcircuit. A la mise sous tension du microcircuit, les programmes et données stockés à l'extérieur du microcircuit peuvent être chargés dans une mémoire volatile du microcircuit.

Cependant, la sauvegarde de programmes et de données à l'extérieur du microcircuit soulève des difficultés, notamment des problèmes de sécurité. En effet, les microcircuits de carte à puce peuvent mémoriser des données secrètes telles que des identifiants et des clés de chiffrement. Par ailleurs, dans certaines applications sensibles comme les applications de paiement ou de contrôle d'accès à un service payant, les programmes exécutés par ces microcircuits sont généralement certifiés par des organismes agréés. La mémoire externe où seraient stockés les programmes et données à sauvegarder n'étant pas nécessairement sécurisée, ni reliée au microcircuit par une liaison sécurisée, il peut donc être nécessaire d'assurer la confidentialité et/ou l'intégrité des données et des programmes sauvegardés à l'extérieur du microcircuit. A cet effet, il peut être prévu de chiffrer et/ou de signer les programmes et les données à sauvegarder avant de les transmettre à l'extérieur du microcircuit. Le processeur doit donc disposer d'une clé de chiffrement secrète. En l'absence de mémoire non volatile, cette clé secrète ne peut pas être conservée par le microcircuit si celui-ci est mis hors tension, pour pouvoir déchiffrer des programmes et données reçus ou vérifier des signatures.

Cette solution soulève également des problèmes de sécurité, lorsqu'il s'agit notamment de contrôler ou limiter un nombre d'opérations autorisées à être exécutées par le microcircuit. Ce problème se pose lorsque le microcircuit ne doit pouvoir exécuter qu'un nombre limité de transactions par exemple dans le cadre d'applications de paiement ou de contrôle d'accès à un lieu ou un service (par exemple de téléchargement de jeux ou de musique). En effet, si les données de transactions sont stockées à l'extérieur du microcircuit, même sous forme chiffrée, une attaque dite par "rejeu" peut consister à remplacer un dernier bloc de données chiffrées par un bloc de données chiffrées plus ancien, transmis par le microcircuit. En l'absence de mémoire non volatile réinscriptible, le microcircuit ne peut pas déterminer si un bloc de données chiffrées reçu correspond au dernier bloc de données qu'il a émis pour être sauvegardé dans une mémoire non volatile externe, ou à un bloc plus ancien. Le document WO2009/156302 A1 divulgue une méthode de mise à jour de logiciel comprenant une protection contre les attaques par rejeu. Cette méthode utilise un compteur monotone en mémoire OTP, c'est à dire programmable une seule fois, afin de vérifier qu'une mise à jour de partition logicielle signée est bien actuelle.

Par ailleurs, les mémoires volatiles prévues dans les microcircuits peuvent présenter une grande capacité. La sauvegarde de toute la mémoire volatile peut donc nécessiter l'immobilisation du microcircuit pendant une durée non négligeable. Cette durée peut être encore augmentée si la sauvegarde est interrompue avant son terme et doit être exécutée à nouveau. Cette durée peut également affecter le confort d'utilisation du microcircuit. Il peut donc être difficilement envisageable de sauvegarder toute la mémoire volatile avant chaque mise hors tension du microcircuit ou pire encore, à chaque changement du contenu de cette mémoire.

Il peut donc être souhaitable de proposer un microcircuit dans lequel la mémoire non volatile réinscriptible, qui peut être notamment de type Flash, EEPROM, MRAM (Magnetic RAM), et RAM sauvegardée par batterie, est supprimée et remplacée par une mémoire non volatile programmable une seule fois OTP (One Time Programmable), ou bien est limitée à une faible capacité, insuffisante pour y stocker le ou les programmes exécutés par le microcircuit et des données à conserver entre deux sessions d'utilisation du microcircuit. Il peut être également souhaitable que cette suppression ou limitation de la mémoire non volatile réinscriptible n'affecte pas la sécurité du microcircuit. Il peut également être souhaitable de ne pas à avoir à sauvegarder à l'extérieur du microcircuit systématiquement la totalité du contenu de la mémoire volatile en une fois. L'invention est définie par les revendication indépendantes 1 et 14.

Des modes de réalisation concernent un procédé de gestion de la mémoire d'un microcircuit sécurisé, comprenant des étapes exécutées par le microcircuit consistant à : former un bloc de données avec du code exécutable et/ou des données mémorisées dans une mémoire du microcircuit, et à sauvegarder à l'extérieur du microcircuit, calculer une signature du bloc de données à l'aide d'une première clé de signature, insérer la signature calculée du bloc de données dans un bloc de signatures formé avec des signatures de blocs de données transmis à l'extérieur du microcircuit, obtenir une valeur courante d'un compteur non volatile interne au microcircuit, calculer une signature du bloc de signatures associé à la valeur courante du compteur interne, à l'aide d'une seconde clé de signature, et transmettre à l'extérieur du microcircuit, le bloc de données, le bloc de signatures et la signature du bloc de signatures.

Selon un mode de réalisation, le procédé comprend des étapes exécutées par le microcircuit consistant à : émettre une requête d'un bloc de signatures, recevoir en réponse un bloc de signatures accompagné d'une signature, calculer une signature du bloc de signatures associé à la valeur courante du compteur interne, à l'aide de la seconde clé de signature, et si la signature calculée correspond à la signature reçue : former un bloc de données avec du code exécutable et/ou des données mémorisées dans la mémoire volatile du microcircuit, et à sauvegarder à l'extérieur du microcircuit, calculer une signature du bloc de données, à l'aide de la première clé de signature, insérer la signature calculée du bloc de données dans le bloc de signatures, modifier la valeur courante du compteur interne, calculer une nouvelle signature du bloc de signatures associé à la nouvelle valeur du compteur interne, à l'aide de la seconde clé de signature, et transmettre à l'extérieur du microcircuit, le bloc de données, le bloc de signatures et la nouvelle signature du bloc de signatures.

Selon un mode de réalisation, le procédé comprend des étapes consistant à : si la signature calculée du bloc de signatures correspond à la signature reçue : émettre une requête d'un bloc de données sauvegardé à l'extérieur du microcircuit, recevoir en réponse le bloc de données requis, calculer une signature du bloc de données reçu, à l'aide de la première clé de signature, et si la signature calculée du bloc de données correspond à une signature du bloc de donnée se trouvant dans le bloc de signatures, charger le bloc de données dans la mémoire volatile du microcircuit.

Selon un mode de réalisation, le procédé comprend une étape de découpage de la mémoire volatile du microcircuit en blocs de données pouvant être sauvegardés à l'extérieur du microcircuit, en association avec une signature du bloc de données, sauvegardée dans le bloc de signatures.

Selon un mode de réalisation, les première et seconde clés de signature sont lues dans une mémoire non volatile du microcircuit ou régénérées à partir d'une donnée secrète fournie par un circuit du microcircuit.

Selon un mode de réalisation, les premières et secondes clés de signature sont identiques.

Selon un mode de réalisation, le procédé comprend une étape de chiffrement d'un bloc de données ou du bloc de signature, à l'aide d'une clé de chiffrement, avant de l'émettre à l'extérieur du microcircuit.

Selon un mode de réalisation, la clé de chiffrement est identique à la première ou la seconde clé de signature.

Selon un mode de réalisation, chaque bloc est signé et/ou chiffré avec une clé de signature ou de chiffrement distincte des clés de signatures et/ou de chiffrement utilisées pour les autres blocs.

Selon un mode de réalisation, chaque clé de signature est générée à partir d'une donnée secrète obtenue par une fonction non reproductible, sensiblement déterministe, non inversible et caractéristique du microcircuit, qui combinée à une fonction de correction d'erreur ou une fonction de moyennage, fournit toujours la même donnée secrète.

Selon un mode de réalisation, la génération de chaque clé de signature comprend des étapes consistant à : générer une donnée aléatoire et une donnée de correction d'erreur à partir de la donnée aléatoire, générer la clé de signature à partir de la donnée aléatoire, obtenir une première donnée secrète à partir d'une fonction non reproductible, sensiblement déterministe, non inversible et caractéristique du microcircuit, et combiner par une première fonction logique inversible la première donnée secrète et la donnée aléatoire, pour obtenir une donnée exportable à l'extérieur du microcircuit, la régénération de chaque clé de signature comprenant des étapes consistant à : obtenir une seconde donnée secrète à partir de la fonction caractéristique du microcircuit, et combiner par une seconde fonction logique inverse de la première fonction logique, la seconde donnée secrète et la donnée exportable, appliquer au résultat de la seconde fonction logique un traitement de correction d'erreur utilisant la donnée de correction d'erreur, pour obtenir la donnée aléatoire, et générer la clé de signature à partir de la donnée aléatoire.

Selon un mode de réalisation, la génération de chaque clé de signature comprend des étapes consistant à : obtenir une troisième donnée secrète à partir de la fonction caractéristique du microcircuit, et combiner par la première fonction logique, la troisième donnée secrète et la donnée de correction d'erreur, pour obtenir une seconde donnée exportable, la régénération de chaque clé de signature comprenant des étapes consistant à : obtenir une quatrième donnée secrète à partir de la fonction caractéristique du microcircuit, et combiner par la seconde fonction logique, la quatrième donnée secrète et la seconde donnée exportable, pour obtenir une donnée de correction d'erreur qui est utilisée par le traitement de correction d'erreur, pour obtenir la donnée aléatoire.

Selon un mode de réalisation, le procédé comprend une étape de modification de bits dans les données secrètes fournies par la fonction caractéristique du microcircuit, par insertion de bits aléatoires ou inversion de bits dans les données secrètes, les modifications de bits dans les données secrètes ayant une étendue telle qu'elles peuvent être corrigées par la fonction de correction d'erreur.

Des modes de réalisation concernent également un microcircuit comprenant un processeur et une mémoire volatile dans lequel est mémorisé un programme exécuté par le processeur, le microcircuit étant configuré pour mettre en œuvre le procédé tel que précédemment défini.

Selon un mode de réalisation, le microcircuit comprend une capacité de mémorisation non volatile réinscriptible insuffisante pour mémoriser les programmes ou le système d'exploitation exécutés par le microcircuit.

Selon un mode de réalisation, le microcircuit comprend un circuit mettant en œuvre une fonction non reproductible, sensiblement déterministe, non inversible et caractéristique du microcircuit.

Des exemples de réalisation de l'invention seront décrits dans ce qui suit, à titre non limitatif en relation avec les figures jointes parmi lesquelles :

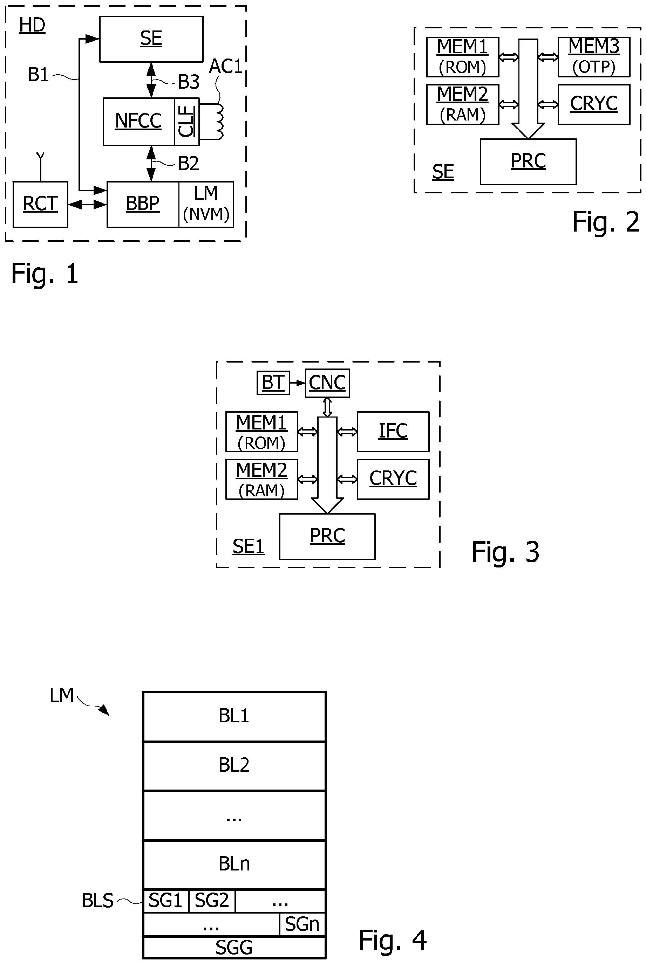

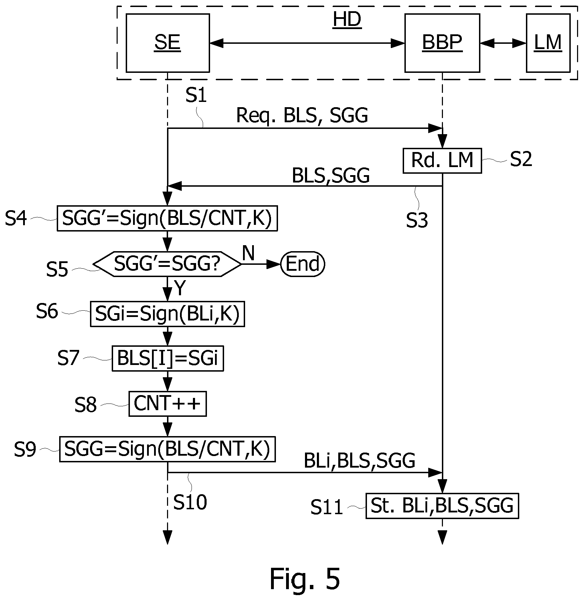

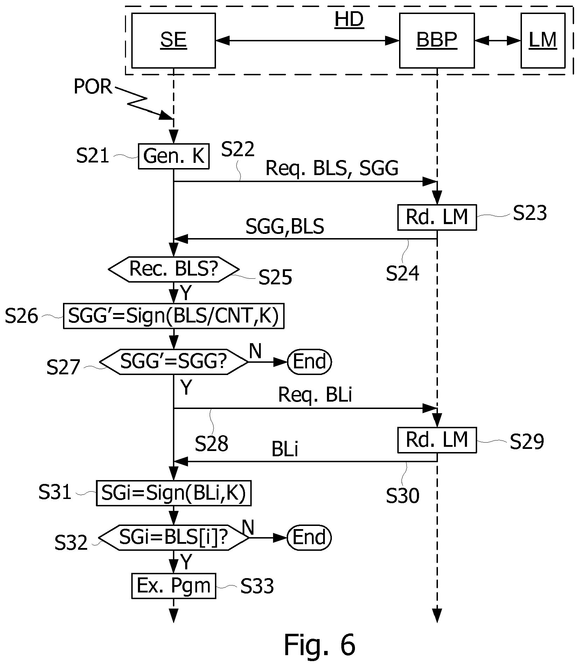

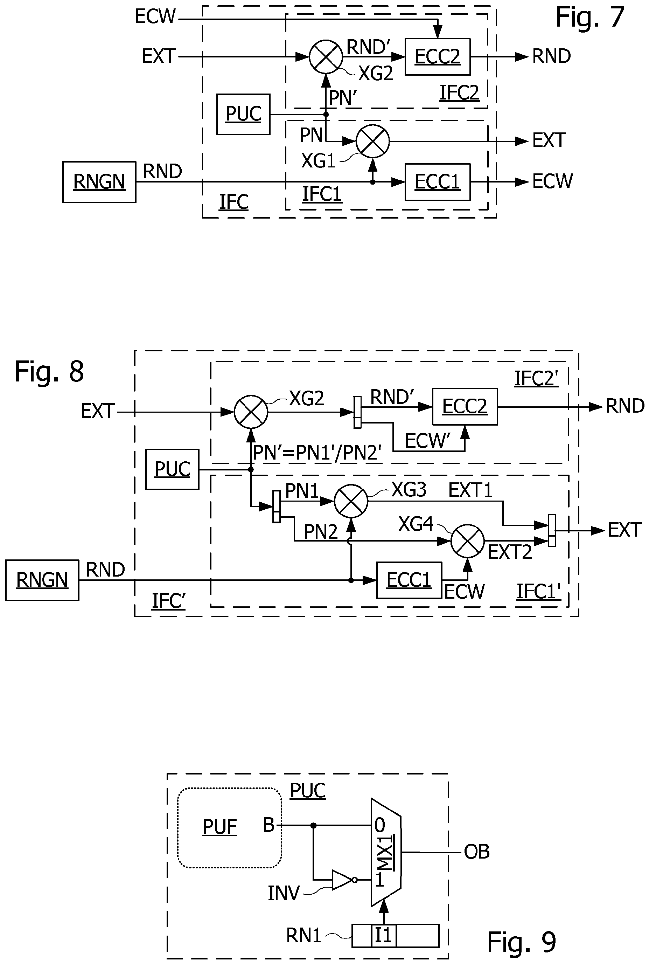

la figure 1 représente schématiquement un dispositif portable comprenant un microcircuit sécurisé, les figures 2 et 3 représentent schématiquement des circuits du microcircuit sécurisé, selon des modes de réalisation, la figure 4 représente une structure de données, selon un mode de réalisation, les figures 5 et 6 représentent des étapes exécutées durant l'exécution d'un programme par le microcircuit sécurisé, et à la mise sous tension du microcircuit, selon des modes de réalisation, les figures 7 et 8 représentent schématiquement des circuits pour générer une même donnée secrète qui peut servir de clé cryptographique ou de clé maître pour générer des clés cryptographiques, la figure 9 représente schématiquement un circuit du microcircuit selon un mode de réalisation.

La figure 1 représente un dispositif portable HD, tel qu'un téléphone mobile équipé d'une interface de communication à champ proche. Le dispositif HD comprend par exemple un processeur principal BBP, également appelé processeur en "bande de base" ("Base-Band Processor"), un circuit de radiocommunication RCT connecté au processeur BBP, et un microcircuit sécurisé SE relié au processeur BBP. Le microcircuit SE peut être de type UICC ("Universal Integrated Circuit Card"), par exemple de type mini-SIM, micro-SIM ou micro-SD.

Le dispositif portable HD peut être par exemple de type à champ proche NFC, équipé d'une interface de communication à champ proche. Ainsi, le dispositif portable peut comprendre également un contrôleur NFC, référencé NFCC, qui est relié au processeur BBP par une liaison B2, un circuit d'antenne AC1 connecté au contrôleur NFCC. Le microcircuit SE peut être relié au contrôleur NFCC par une liaison B3. Le microcircuit SE peut être configuré pour effectuer des transactions NFC avec un terminal de transaction (non représenté) par l'intermédiaire du contrôleur NFCC. Le contrôleur NFCC comprend une interface de communication sans contact CLF connectée au circuit d'antenne AC1. Le contrôleur NFCC peut se présenter sous la forme d'un circuit intégré, tel que MicroRead® commercialisé par le Déposant.

Le dispositif HD peut également comprendre un autre processeur sécurisé, par exemple intégré dans une carte SIM ("Subscriber Identity Module"), ainsi qu'une carte mémoire non volatile, telle qu'une carte Micro SD ("Micro Secure Digital card"). Le microcircuit SE qui est par exemple intégré dans une carte, peut être relié au processeur BBP par une liaison B1.

La figure 2 représente des circuits du microcircuit SE. Le microcircuit SE comprend un processeur PRC, ainsi que des mémoires MEM1, MEM2 et des circuits de calcul cryptographiques CRYC, connectés au processeur PRC. La mémoire MEM1 est par exemple de type ROM ("Read-Only Memory") ou de type programmable une seule fois OTP ("One Time Programmable") et la mémoire MEM2 est volatile, par exemple de type RAM ("Random Access Memory").

Selon un mode de réalisation, le microcircuit SE comprend une mémoire non volatile MEM3 de faible capacité, par exemple de quelques dizaines d'octets, qui peut être réinscriptible, ou bien une mémoire programmable une seule fois (OTP). Les mémoires OTP peuvent être fabriquées à moindre coût par comparaison avec une mémoire de type Flash ou EEPROM, en faisant appel uniquement à des étapes de fabrication de circuits CMOS. La mémoire MEM3 peut également être une mémoire RAM de faible capacité, alimentée par une batterie miniaturisée dédiée, lorsque le microcircuit n'est plus alimenté par une source de tension d'alimentation externe, par exemple celle du dispositif HD. La batterie est rechargée lorsque le microcircuit est relié à une source de tension d'alimentation externe. Ici "faible capacité" signifie de capacité insuffisante pour sauvegarder le programme ou le système d'exploitation exécuté par le processeur PRC. La mémoire MEM3 est utilisée pour sauvegarder la valeur d'un compteur.

La figure 3 représente un microcircuit SE1 selon un autre mode de réalisation. Le microcircuit SE1 diffère du microcircuit SE en ce qu'il ne comprend pas de mémoire non volatile, mais un compteur réalisé par un circuit en logique câblée CNC et un circuit IFC permettant de générer une même donnée secrète à chaque mise sous tension du microcircuit SE1. Cette donnée secrète peut être utilisée comme clé de chiffrement ou pour générer une telle clé. Le circuit CNC peut être alimenté par une batterie miniature dédiée BT. La batterie BT est rechargée lorsque le microcircuit est relié à une source de tension d'alimentation externe.

Bien entendu, le microcircuit SE (figure 2) peut aussi comprendre un circuit tel que le circuit IFC pour générer une donnée secrète susceptible d'être utilisée en tant que une clé de chiffrement ou pour générer une telle clé de chiffrement.

Selon un mode de réalisation, un ou plusieurs programmes exécutés par le microcircuit SE, SE1 et des données manipulées par ces programmes, se trouvant dans la mémoire MEM2 sont sauvegardées dans une mémoire externe non volatile, par exemple une mémoire LM connectée au processeur BBP. La figure 4 représente une structure de données dans la mémoire LM dans laquelle sont sauvegardées les programmes et données mémorisés dans la mémoire MEM2 du microcircuit SE, SE1. Sur la figure 4, la structure de données comprend des blocs BL1, BL2, ... BLn et BLS et une signature SGG du bloc BLS. Le bloc BLS comprend une signature SG1, SG2, ... SGn de chacun des blocs BL1-BLn.

La figure 5 représente des étapes exécutées par le microcircuit sécurisé SE, SE1, préalablement mis en communication avec une mémoire de stockage externe, par exemple la mémoire LM accessible par l'intermédiaire du processeur BBP. Ces étapes sont exécutées par le microcircuit SE, SE1 pour sauvegarder dans la mémoire LM, un bloc BLi se trouvant dans la mémoire MEM2. A une étape S1, le microcircuit SE, SE1 émet une requête de lecture du bloc BLS et de la signature SGG du bloc BLS, à destination du processeur BBP. A une étape S2, le processeur BBP lit les informations requises dans la mémoire LM. A une étape S3, le processeur BBP transmet au microcircuit SE, SE1, le bloc BLS et la signature SGG se trouvant dans la mémoire LM. A une étape S4, le microcircuit SE, SE1 calcule une signature du bloc BLS reçu, concaténé à la valeur du compteur CNT lue dans la mémoire MEM3 ou fournie par le circuit CNC. Cette signature est calculée à l'aide d'une clé secrète K, par exemple mémorisée dans la mémoire MEM3 du microcircuit SE, ou générée à l'aide du circuit IFC du microcircuit SE1. A une étape S5, le microcircuit SE, SE1 compare la signature SGG' obtenue à l'étape S4 avec la signature SGG reçue à l'étape S3. Le microcircuit SE, SE1 exécute ensuite des étapes S6 à S10 seulement si la signature SGG' correspond à la signature SGG. A l'étape S6, le microcircuit SE, SE1 calcule à l'aide de la clé K une signature SGi du bloc BLi à sauvegarder. A l'étape S7, le microcircuit SE, SE1 met à jour le bloc BLS en y insérant la signature SGi obtenue à l'emplacement de la signature du bloc BLi. A l'étape S8, le microcircuit incrémente la valeur du compteur CNT mémorisée dans la mémoire MEM3 ou par le circuit CNC. A l'étape S9, le microcircuit SE, SE1 calcule la signature SGG du bloc BLS appliquée au bloc BLS tel que mis à jour à l'étape S7, concaténé à la nouvelle valeur du compteur CNT obtenue à l'étape S8. A l'étape S10, le microcircuit SE, SE1 transmet les blocs BLi et BLS et la signature SGG au processeur BBP. A l'étape S11, le processeur BBP reçoit ces données et les sauvegarde dans la mémoire LM, éventuellement en remplacement des blocs BLi, BLS et de la signature SGG qui y étaient mémorisés.

Lors d'une première sauvegarde d'un premier bloc BLi dans la mémoire LM, seules les étapes S6, S7 et S9 à S11 sont exécutées. La valeur du compteur CNT peut être nulle si le microcircuit exécute pour la première fois l'étape S8.

De cette manière, le microcircuit SE, SE1 peut exploiter de la mémoire externe non volatile, comme celle d'un téléphone mobile, qui est parfois de grande capacité et en grande partie inutilisée.

Il est à noter que le microcircuit SE, SE1 peut avoir un accès direct à une mémoire non volatile externe au microcircuit. Dans ce cas, les étapes S1 et S9 consistent en l'émission de requêtes de lecture et d'écriture de cette mémoire externe.

Selon un mode de réalisation, la taille des blocs BLi est définie en fonction de l'organisation physique ou logique de la mémoire LM ou de la mémoire MEM2. Ainsi la taille de chaque bloc BLi peut correspondre à la taille d'une page ou d'un secteur physique ou logique de la mémoire LM ou MEM2.

Selon un autre mode de réalisation, la taille des blocs BLi est définie en fonction de l'organisation des programmes et données dans la mémoire MEM2. Ainsi, un bloc BLi peut comprendre tout ou partie du programme et des données d'une application installée dans le microcircuit. Le découpage en blocs BLi des programmes et données mémorisés dans la mémoire MEM2 peut également être déterminé afin de réduire autant que possible les opérations de sauvegarde et de restauration d'un bloc dans la mémoire MEM2 à partir de la mémoire LM.

La figure 6 représente des étapes exécutées par le microcircuit SE, SE1 pour charger dans la mémoire MEM2, un bloc de donnée BLi stocké dans la mémoire externe LM. Ces étapes sont exécutées par exemple à la mise sous tension POR du microcircuit, ou lorsqu'une application stockée dans le bloc BLi doit être exécutée. En effet, il peut être prévu qu'à sa mise sous tension, le microcircuit SE, SE1 émette une requête de chargement du premier bloc BL1 qui contient le système d'exploitation du processeur PRC ou une première partie de ce système d'exploitation, et que le programme se trouvant dans le bloc BL1 permette de déterminer quel bloc BLi doit être également chargé, en fonction d'une application à exécuter.

A une étape S21, le microcircuit SE, SE1 régénère la clé K à l'aide du circuit IFC ou lit celle-ci dans la mémoire MEM3. A une étape S22, le microcircuit SE, SE1 émet une requête de lecture du bloc BLS et de la signature SGG. A une étape S23, cette requête est reçue et exécutée par le processeur BBP qui lit le bloc requis dans la mémoire LM. A une étape S24, le processeur BBP transmet en réponse le bloc BLS et la signature SGG. Ces données sont reçues par le microcircuit SE, SE1 à une étape S25. A une étape S26, le microcircuit SE, SE1 calcule à l'aide de la clé K une signature SGG' du bloc BLS concaténé avec la valeur courante d'un compteur CNT lue dans la mémoire MEM3 ou fournie par le circuit CNC. Si la mémoire MEM3 est de type OTP, le compteur CNT peut être mis en œuvre en gérant cette mémoire à la manière d'un boulier, en changeant l'état d'un bit de la mémoire à chaque fois que la valeur du compteur CNT doit être modifiée. A une étape S27, le microcircuit SE, SE1 compare la signature calculée SGG' avec la signature SGG reçue à l'étape S24. Le microcircuit SE, SE1 exécute ensuite des étapes S28 à S33 seulement si la signature SGG' correspond à la signature SGG. A l'étape S28, le microcircuit SE, SE1 émet une requête d'un bloc BLi.

A une étape S29, cette requête est reçue et exécutée par le processeur BBP qui lit le bloc requis dans la mémoire LM. A l'étape S30, le processeur BBP transmet en réponse le bloc BLi. A l'étape S31, le microcircuit SE, SE1 reçoit le bloc BLi et calcule une signature SGi' du bloc BLi à l'aide de la clé K. A l'étape S32, le microcircuit SE, SE1 compare la signature calculée SGi' avec la signature SGi du bloc BLi figurant dans le bloc BLS. Le microcircuit SE, SE1 exécute ensuite l'étape S33 seulement si les signatures SGi et SGi' correspondent. A l'étape S33, le microcircuit SE, SE1 charge dans la mémoire MEM2. Si le bloc BLi ainsi chargé comporte un programme Pgm, le microcircuit SE, SE1 exécute ce programme. Si d'autres blocs BL1-BLn sont nécessaires, le microcircuit peut répéter les étapes S28 et S31 à S32 pour charger les blocs manquants dans la mémoire MEM2 avant d'exécuter l'étape S33.

De cette manière, si un bloc BLi est remplacé par une ancienne version de ce bloc, sa signature ne correspondra pas à celle qui figure dans le bloc BLS. Par ailleurs, si le bloc BLS est modifié en y insérant la signature de l'ancien bloc BLi, il n'est pas possible de générer la signature SGG correspondant au bloc BLS ainsi modifié sans connaître la clé K et avoir le contrôle total sur la valeur du compteur CNT. Il suffit donc d'empêcher que la clé K soit accessible de l'extérieur du microcircuit, ou que le compteur puisse être forcé à une valeur précédente, pour protéger le microcircuit contre ce que l'on appelle le "rejeu" d'un ancien bloc de programme et/ou de données BLi qui est authentique mais qui n'est pas le dernier bloc sauvegardé par le microcircuit SE.

Il est à noter que les différentes valeurs de compteur CNT utilisées pour calculer la signature SGG ne sont pas nécessairement consécutives, ni croissantes ni décroissantes. Il importe simplement que la valeur CNT soit changée à chaque fois qu'une nouvelle signature SGG est calculée.

La clé K utilisée pour calculer la signature SGG du bloc BLS peut être différente de celle utilisée pour calculer les signatures SG1-SGn des blocs BL1-BLn. De même, chacun des blocs BL1-BLn peut être signé avec une clé différente de celles utilisées pour signer les autres blocs BL1-BLn. Par ailleurs, les blocs BL1-BLn et BLS peuvent être chiffrés avant d'être transmis en dehors du microcircuit SE, SE1. Les blocs BL1-BLn et BLS reçus par le microcircuit sont alors déchiffrés par ce dernier avant que les programmes et données qu'ils contiennent soient installés dans la mémoire MEM2. La clé utilisée pour chiffrer les blocs BL1-BLn et BLS peut être différente de celle(s) utilisée(s) pour calculer les signatures SGG, SG1-SGn. De même chaque bloc BLi peut être chiffré avec une clé qui lui est propre. Les calculs de signature et les chiffrements peuvent être effectués à l'aide du circuit CRYC.

La mémoire MEM2 peut être divisée en blocs BLi, chaque bloc étant associé à un indicateur de modification spécifiant si le bloc a été modifié depuis la dernière sauvegarde du bloc dans la mémoire LM, ou depuis le dernier chargement du bloc à partir de la mémoire LM. Les indicateurs de modification des blocs BLi sont mis à jour à chaque écriture dans la mémoire MEM2. A certaines étapes, par exemple à fin de l'exécution d'une application par le microcircuit, ce dernier lit successivement les indicateurs de modification et exécute les étapes S1 à S11 pour chaque bloc BLi associé à un indicateur de modification indiquant que le bloc a été modifié.

La clé K peut être générée à partir d'une fonction irréversible H appliquée à un premier nombre mémorisé dans la mémoire MEM1 ou MEM3. Ce nombre peut être par exemple un identifiant du microcircuit, tel qu'un numéro de série. La clé K peut être générée lors de l'exécution du programme mémorisé dans la mémoire MEM1. La fonction irréversible peut être une fonction de hachage tel que MD5, SHA1 ou SHA256.

Si plusieurs clés sont nécessaires, par exemple pour signer le bloc BLS d'une part et d'autre part, chacun des blocs BL1-BLn, ou pour chiffrer ces blocs, chaque clé Ki peut être générée en appliquant l'une ou l'autre des formules suivantes :

$$Ki = H(k/i), \text{ ou} \qquad\qquad (1)$$

$$Ki = H((Ki-1)/i), \qquad\qquad (2)$$

dans lesquelles H est une fonction irréversible telle qu'une fonction de hachage ou une fonction PUF, i est un nombre qui est modifié, par exemple incrémenté, à chaque génération de clé à partir d'une valeur initiale prédéfinie, k/i représente un premier nombre k concaténé au nombre i, et Ki-1 est une clé générée à partir du nombre i-1, la clé K1 étant égale à H(k/1). Le premier nombre k peut être choisi égal au nombre RND dans les figures 7 et 8.

Une série de clés peut ainsi être générée de manière déterministe, si le premier nombre choisi k est toujours le même, par exemple la clé K, et si la série des nombres i choisie est toujours la même pour un microcircuit donné. Des séries de clés dérivées peuvent également être générées à partir d'une clé Ki, et en réutilisant la série des nombres i, en appliquant la fonction irréversible à chacun des nombres de la série de nombres i, concaténé avec la clé Ki.

Selon un autre mode de réalisation, des clés secrètes peuvent également être générées en appliquant à un premier nombre une première fonction irréversible H1 pour obtenir un nombre racine de clé, et en appliquant à ce nombre, une seconde fonction irréversible H2. Plusieurs clés secrètes peuvent être générées en appliquant successivement la fonction H1 à chaque résultat précédemment fourni par cette fonction pour obtenir une série de nombres racines de clé dérivés, et en appliquant la fonction H2 à chaque nombre racine de clé dérivé ainsi obtenu. Ici encore le premier nombre choisi k peut être toujours le même, comme la clé K, pour toujours générer la même série de clés Ki. Ainsi, une série de clés Ki peut être générée en appliquant les équations suivantes :

$$Si = H1(Si-1), \text{ et} \qquad\qquad\qquad (3)$$

$$Ki = H2(Si) \qquad\qquad\qquad (4)$$

avec S1 = H1(k), S1 et Si étant respectivement les nombres racine des clés K1 et Ki. L'une et/ou l'autre des fonctions H1 et H2 peut être une fonction PUF mise en œuvre par le circuit IFC. Le premier nombre S1 peut être choisi égal au nombre RND dans les figures 7 et 8 ou au résultat de la fonction H1 appliqué au nombre RND.

Selon un mode de réalisation, le circuit IFC comprend un circuit physiquement non reproductible, mettant en œuvre une fonction irréversible physiquement non reproductible PUF ("Physically Unclonable Function") dont le fonctionnement est essentiellement imprédictible et non déterminable. Une telle fonction peut donc être utilisée à des fins d'identification de microcircuit ou pour générer une donnée secrète qui peut être utilisée comme clé K ou pour générer la clé K. Les fonctions PUF sont par exemple réalisées par un circuit sensible aux conditions de fabrication du circuit, de sorte que les fonctions PUF respectives de deux microcircuits ont une probabilité très faible de fournir un résultat identique, même si les deux microcircuits sont issus d'une même chaine de fabrication. La fonction PUF est donc une fonction à sens unique équivalente à une fonction de hachage telle que SHA1, mais caractéristique de chaque microcircuit. Le circuit IFC est utilisé pour générer une ou plusieurs clés de signature ou de chiffrement.

La figure 7 représente le circuit IFC, selon un mode de réalisation. Le circuit IFC comprend des circuits PUC, IFC1 et IFC2. Le circuit PUC met en œuvre une fonction irréversible physiquement non reproductible PUF ("Physically Unclonable Function") dont le fonctionnement est essentiellement imprédictible et non déterminable. Le circuit PUC présente la particularité d'être physiquement non reproductible. Le circuit IFC1 est activé lors de la mise en service du microcircuit et à chaque fois que le circuit doit être réinitialisé notamment pour générer une nouvelle clé K à utiliser pour signer les blocs BLi, BLS. Le circuit IFC2 est activé à chaque fois que le microcircuit est mis sous tension pour regénérer la clé K qui a été précédemment utilisée pour signer les blocs BLi, BLS sauvegardés dans la mémoire LM.

Le circuit IFC1 comprend un opérateur logique de type OU Exclusif XG1 et un circuit de génération d'une donnée de correction d'erreur ECC1. L'opérateur XG1 est connecté en sortie du circuit PUC et d'un circuit de génération de nombres aléatoires RNGN et fournit une donnée EXT qui est donc égale à PN ⊕ RND, PN étant la donnée fournie par le circuit PUC, RND étant un nombre aléatoire fourni par le circuit RNGN et "⊕" représentant l'opérateur OU Exclusif. Les données RND et PN ont donc la même taille en nombre de bits. Le circuit ECC1 reçoit le nombre aléatoire RND et fournit une donnée de correction d'erreur ECW.

Le circuit IFC2 comprend un opérateur logique de type OU Exclusif XG2 et un circuit de correction d'erreur ECC2. L'opérateur XG2 reçoit la donnée EXT qui a été transmise au microcircuit SE, ainsi qu'une donnée PN' issue du circuit PUC. Compte tenu des propriétés du circuit PUC, la donnée PN' est censée être identique ou proche de la donnée PN qui a été produite lors de la mise en service du microcircuit SE. Ici "proche" signifie identique à un nombre bits près inférieur à la moitié du nombre de bits des données PN, PN'. L'opérateur XG2 fournit une donnée résultante RND' au circuit ECC2 qui reçoit par ailleurs la donnée ECW qui a été transmise au microcircuit SE. Ainsi, la donnée RND' est égale à PN' ⊕ EXT. Le circuit ECC2 corrige la donnée RND' et ainsi restitue la donnée RND. A noter que si les données PN et PN' sont identiques, l'opérateur XG2 fournit directement la donnée RND, et le circuit ECC2 ne détecte aucune erreur à corriger et donc fournit également la donnée RND.

Les circuits ECC1 et ECC2 peuvent mettre en œuvre différents algorithmes de correction d'erreur tels que BCH, Reed Solomon, ou ceux basés sur l'utilisation des codes de Hamming ou de Gray.

Dans l'exemple des figures 5 et 6, les données EXT et ECW sont sauvegardées dans la mémoire LM à la suite de leur génération, par exemple avec la signature SGG à l'étape S11. Les données EXT et ECW sont par ailleurs transmises aux étapes S3 et S24 au microcircuit pour permettre à ce dernier de régénérer la clé K, à partir de la donnée secrète RND.

Certains algorithmes de correction d'erreur utilisent une donnée de correction d'erreur qui peut être exploitée seule pour retrouver la valeur de la donnée à corriger. Or la donnée ECW est transmise en dehors du microcircuit SE1. Pour que la donnée RND soit conservée secrète quel que soit l'algorithme de correction d'erreur utilisé, le circuit IFC peut être modifié conformément à celui représenté sur la figure 8.

Selon un autre mode de réalisation le circuit IFC' représenté sur la figure 8 diffère du circuit IFC en qu'il comprend des circuits IFC1', IFC2' différents des circuits IFC1, IFC2. Le circuit IFC1' comprend des opérateurs logiques XG3, XG4 de type OU Exclusif et le circuit ECC1. L'opérateur XG3 reçoit une partie PN1 de la donnée PN générée par le circuit PUC et la donnée aléatoire RND, la partie PN1 étant de la taille de la donnée RND. L'opérateur XG3 fournit une donnée EXT1. Le circuit ECC1 fournit une donnée de correction d'erreur ECW à partir de la donnée RND. L'opérateur XG4 reçoit une autre partie PN2 de la donnée PN et la donnée ECW. L'opérateur XG4 fournit une donnée EXT2 qui est concaténée avec la donnée EXT1 pour former la donnée EXT. Les données PN1, RND et EXT1 présentent donc une même taille en nombre de bits. De même, les données PN2 et ECW présentent une même taille. De cette manière, la donnée ECW est transformée en la donnée EXT2 avant d'être transmise à l'extérieur du microcircuit SE.

Le circuit IFC2' diffère du circuit IFC2 en ce que l'opérateur XG2 fournit à la fois la donnée RND' et une donnée de correction d'erreur ECW' à partir de la donnée EXT et de la donnée PN' fournie par le circuit PUC. Comme dans le circuit IFC2, le circuit ECC2 fournit la donnée RND à partir des données RND' et ECW'. Bien que les données ECW et ECW' peuvent être différentes, elles sont peu différentes compte tenu des propriétés de la fonction PUF mise en œuvre par le circuit PUC. Il est donc probable que le nombre RND qui est fourni par le circuit ECC2 soit proche de celui qui a été généré lors de l'activation du circuit IFC1' à la mise en service du microcircuit SE1, le terme "proche" ayant le sens précédemment défini.

Il va également de soi que les fonctions mises en œuvre par les circuits représentés sur les figures 7 et 8 peuvent être également mises en œuvre sous forme logicielle, par une séquence d'instructions exécutables par le processeur PRC. Il va également de soi que toute autre fonction logique inversible que la fonction OU Exclusif peut être employée. Ainsi tout couple de fonctions logiques (F1, F2) peut être employé à la place de la fonction OU Exclusif (pour F1 et F2), dès lors que sont satisfaites pour tout couple de de données (x,y) et pour toute donnée PN, les relations suivantes :

$$y = F1(x,PN), \text{ et } x = F2(y,PN). \tag{5}$$

La clé K peut être choisie égale à la donnée RND ou être dérivée de cette dernière par exemple à l'aide d'une fonction irréversible telle qu'une fonction de hachage comme MD5 et SHA-1, ou en appliquant les équations (1), (2) ou (3) et (4). De cette manière, il n'est pas nécessaire de prévoir une mémoire non volatile dans le microcircuit pour stocker la clé K.

Certains circuits non reproductibles mettant en œuvre une fonction PUF peuvent être sensibles aux attaques par injection de faute. En effet, pour donner une certaine stabilité à la donnée fournie par un tel circuit, cette donnée peut être traitée par un circuit de correction d'erreur. En forçant un bit à 0 en sortie du circuit non reproductible par exemple à l'aide d'un faisceau laser et en observant la réaction du circuit de correction d'erreur, il est possible de déterminer si une erreur a été corrigée ou si aucune erreur n'a été corrigée. Selon qu'une réaction est observée ou non, il est possible de déduire si le bit modifié par l'injection de faute doit être à 1 ou à 0. Il est donc possible de déduire la donnée normalement fournie en sortie du circuit de correction d'erreur, en injectant des fautes sur chacun des bits de sortie du circuit non reproductible. Pour assurer une certaine stabilité de la valeur des données qu'il fournit, le circuit non reproductible peut être maintenu dans des conditions, notamment de température, stables. La découverte de la donnée fournie par le circuit non reproductible peut permettre à l'attaquant de déterminer une donnée secrète telle qu'une clé de cryptographie utilisée par le microcircuit.

Selon un mode de réalisation, le circuit PUC du circuit IFC représenté sur la figure 3, 7 ou 8 comprend des moyens pour modifier à chaque utilisation du circuit, quelques bits de la valeur fournie par la fonction PUF mise en œuvre par le circuit, ceci afin d'assurer que le circuit de correction d'erreur corrige systématiquement des erreurs dans chaque donnée fournie par le circuit non reproductible. Le nombre de bits modifiés de chaque donnée fournie est inférieur ou égal au nombre de bits erronés que le circuit de correction d'erreur est capable de corriger.

Les bits modifiés peuvent être des bits ajoutés aux bits fournis par la fonction PUF qui sont issus d'un générateur aléatoire. Les bits modifiés peuvent être des bits dont la polarité est inversée ou forcée à une certaine valeur. Les bits modifiés peuvent également être choisis de manière aléatoire. L'introduction de modifications de la donnée fournie par la fonction PUF peut être effectuée une seule fois par exemple à la mise en service du microcircuit mettant en œuvre la fonction PUF, ou bien à chaque fois que la fonction PUF est activée.

La figure 9 représente le circuit PUC, et en particulier la fonction PUF implémentée par ce circuit et une sortie de bit OB du circuit PUC, selon un mode de réalisation. Certaines des lignes de sortie de bit B de la fonction PUF sont reliées à une sortie de bit OB du circuit PUC par l'intermédiaire d'un inverseur INV et d'un multiplexeur MX1. Le multiplexeur MX1 reçoit en entrée le bit B et le bit B inversé par l'inverseur INV. Le multiplexeur MX1 est commandé par un bit aléatoire I1. Ainsi, le bit OB fourni en sortie du circuit PUC correspond soit au bit B fourni par la fonction PUB, soit à ce bit inversé en fonction de la valeur du bit aléatoire I1. Dans l'exemple de la figure 9, si le bit I1 est à 0, le bit B est fourni en sortie du circuit PUB sans changement, si le bit I1 est à 1, le bit B est inversé.

Selon un mode de réalisation, toutes les lignes de sortie de bit de la fonction PUF sont reliées à une sortie de bit du circuit PUC par l'intermédiaire d'un tel circuit comportant un inverseur et un multiplexeur. Chaque multiplexeur MX1 est commandé par un bit respectif d'une donnée aléatoire RN1. Le nombre de bits à 1 (dans l'exemple de la figure 9) de la donnée RN1 est limité au nombre maximum de bits de la donnée issue de la fonction PUF, pouvant être modifiés, compte tenu des capacités de correction d'erreur du circuit de correction d'erreur relié en sortie du circuit PUC.

Il apparaîtra clairement à l'homme de l'art que la présente invention est susceptible de diverses variantes de réalisation et diverses applications. En particulier, le procédé selon l'invention n'est pas limitée à la sauvegarde de données ou de programmes présents dans une mémoire volatile d'un microcircuit, mais peut également être appliqué à des données et/ou des programmes stockés dans une mémoire non volatile du microcircuit, notamment lorsque cette mémoire présente une capacité insuffisante.

Il apparaîtra également clairement à l'homme de l'art que les différents modes de réalisation présentés précédemment sont susceptibles de diverses variantes de réalisation et diverses applications, et peuvent être mis en œuvre indépendamment les uns des autres, ou combinés de diverses autres manières que celles présentées. En particulier, la présente invention n'est pas limitée aux dispositifs NFC et aux microcircuits configurés pour conduire des transactions NFC, mais peut s'appliquer à tout microcircuit sécurisé.

Par ailleurs, les modes de réalisation décrits en référence aux figures 7 et 8 peuvent être mis en œuvre d'une manière indépendante des séquences d'étapes représentées sur les figures 5 et 6, dans tout circuit utilisant une donnée secrète, et devant être capable de régénérer cette donnée à partir de données stockées dans une mémoire non sécurisée.

La génération de clés peut par exemple être basée sur un procédé de génération et de régénération d'une clé maitre et un microcircuit mettant en œuvre un tel procédé. Ce procédé comprend des étapes consistant à :

générer une donnée aléatoire RND et une donnée de correction d'erreur ECW à partir de la donnée aléatoire,
générer une clé maitre K à partir de la donnée aléatoire,
obtenir une première donnée secrète PN, PN1 à partir d'une fonction PUF, non reproductible, sensiblement déterministe, non inversible et caractéristique du microcircuit, et
combiner par une première fonction logique inversible la première donnée secrète et la donnée aléatoire, pour obtenir une donnée exportable EXT, EXT1 à l'extérieur du microcircuit.

La régénération de la clé maitre comprend des étapes consistant à :

obtenir une seconde donnée secrète PN' à partir de la fonction caractéristique du microcircuit, et
combiner par une seconde fonction logique inverse de la première fonction logique, la seconde donnée secrète et la donnée exportable,
appliquer au résultat RND' de la seconde fonction logique un traitement de correction d'erreur ECC2 utilisant la donnée de correction d'erreur ECW, ECW', pour obtenir la donnée aléatoire, et
générer la clé de signature à partir de la donnée aléatoire.

Selon un mode de réalisation, la génération de la clé maitre comprend des étapes consistant à :

obtenir une troisième donnée secrète PN2 à partir de la fonction PUF caractéristique du microcircuit, et
combiner par la première fonction logique, la troisième donnée secrète et la donnée de correction d'erreur ECW, pour obtenir une seconde donnée exportable EXT2,
la régénération de la clé maitre comprenant des étapes consistant à :

obtenir une quatrième donnée secrète PN2' à partir de la fonction caractéristique du microcircuit, et
combiner par la seconde fonction logique, la quatrième donnée secrète et la seconde donnée exportable, pour obtenir une donnée de correction d'erreur qui est utilisée par le traitement de correction d'erreur ECC2, pour obtenir la donnée aléatoire RND.

Bien entendu, ces caractéristiques peuvent être combinées à d'autres caractéristiques précédemment décrites dans la présente description.

De même, les modes de réalisation décrits notamment en référence à la figure 9 peuvent être mis en œuvre indépendamment des modes de réalisation décrits en référence aux figures 7 et 8. En particulier, il peut être prévu de modifier certains bits d'une donnée fournie par une fonction PUF dans tout circuit mettant en œuvre une telle fonction, dès lors que cette dernière est couplée à une fonction de correction d'erreur. Inversement la fonction PUF implémentée dans le circuit PUC n'est pas nécessairement couplée à une fonction de correction d'erreur. D'autres méthodes peuvent en effet être mises en œuvre afin de "stabiliser" la ou les données fournies par la fonction PUF. En effet, il peut être prévu d'activer plusieurs fois la fonction PUF et de fournir en tant que donnée de sortie de cette fonction une valeur moyenne de toutes les données obtenues à la suite de ces activations.

Par ailleurs, la génération de clé secrète peut être basée sur un procédé de génération d'une donnée secrète de manière sensiblement déterministe, non inversible, dans un microcircuit, à l'aide d'un circuit non reproductible, caractéristique du microcircuit. Ce procédé comprend des étapes de génération d'une donnée secrète à l'aide d'une telle fonction, modification de bits dans la donnée secrète, par insertion de bits aléatoires ou inversion de bits dans la donnée secrète, et application à la donnée secrète d'une fonction de correction d'erreur, les modifications de bits dans la donnée secrète ayant une étendue telle qu'elles peuvent être corrigées par la fonction de correction d'erreur.

Le rang des bits modifiés, la valeur des bits modifiés peuvent être fixes ou choisis aléatoirement. Le nombre de bits modifiés peut également être fixe ou choisi aléatoirement dans la limite de la capacité de correction d'erreur de la fonction de correction d'erreur.

Bien entendu, ces caractéristiques peuvent être combinées à d'autres caractéristiques précédemment décrites dans la présente description.

## Revendications

1. Procédé de gestion de la mémoire d'un microcircuit sécurisé (SE, SE1), comprenant des étapes exécutées par le microcircuit consistant à :

    former un bloc de données (BLi) avec du code exécutable et/ou des données mémorisées dans une mémoire (MEM2, MEM3) du microcircuit, et à sauvegarder à l'extérieur du microcircuit,
    calculer une signature (SGi) du bloc de données à l'aide d'une première clé de signature,
    insérer la signature calculée du bloc de données dans un bloc de signatures (BLS) formé avec des signatures de blocs de données transmis à l'extérieur du microcircuit,
    obtenir une valeur courante d'un compteur non volatile (CNT) interne au microcircuit,
    calculer une signature (SGG) du bloc de signatures associé à la valeur courante du compteur interne, à l'aide d'une seconde clé de signature, et
    transmettre à l'extérieur du microcircuit, le bloc de données, le bloc de signatures et la signature du bloc de signatures.

2. Procédé selon la revendication 1, comprenant des étapes exécutées par le microcircuit consistant à :

    émettre une requête d'un bloc de signatures,
    recevoir en réponse un bloc de signatures (BLS) accompagné d'une signature (SGG),
    calculer une signature (SGG') du bloc de signatures associé à la valeur courante du compteur interne (CNT), à l'aide de la seconde clé de signature (K), et
    si la signature calculée correspond à la signature reçue :

        former un bloc de données (BLi) avec du code exécutable et/ou des données mémorisées dans la mémoire volatile (MEM2) du microcircuit, et à sauvegarder à l'extérieur du microcircuit,
        calculer une signature (SGi) du bloc de données, à l'aide de la première clé de signature,
        insérer la signature calculée du bloc de données dans le bloc de signatures,
        modifier la valeur courante du compteur interne,
        calculer une nouvelle signature du bloc de signatures associé à la nouvelle valeur du compteur interne, à l'aide de la seconde clé de signature, et
        transmettre à l'extérieur du microcircuit, le bloc de données, le bloc de signatures et la nouvelle signature du bloc de signatures.

3. Procédé selon la revendication 2, comprenant des étapes consistant à :
    si la signature calculée (SGG') du bloc de signatures (BLS) correspond à la signature reçue (SGG) :

        émettre une requête d'un bloc de données (BLi) sauvegardé à l'extérieur du microcircuit,
        recevoir en réponse le bloc de données requis,
        calculer une signature (SGi) du bloc de données reçu, à l'aide de la première clé de signature, et
        si la signature calculée du bloc de données correspond à une signature du bloc de donnée se trouvant dans le bloc de signatures (BLS), charger le bloc de données dans la mémoire volatile (MEM2) du microcircuit.

4. Procédé selon l'une des revendications 1 à 3, comprenant une étape de découpage de la mémoire volatile (MEM2) du microcircuit en blocs de données (BL1-BLn) pouvant être sauvegardés à l'extérieur du microcircuit, en association avec une signature (SG1-SGn) du bloc de données, sauvegardée dans le bloc de signatures (BLS).

5. Procédé selon l'une des revendications 1 à 4, dans lequel les première et seconde clés de signature (K) sont lues dans une mémoire non volatile (MEM3) du microcircuit ou régénérées à partir d'une donnée secrète fournie par un circuit (PUC, RNGN) du microcircuit.

6. Procédé selon l'une des revendications 1 à 5, dans lequel les premières et secondes clés de signature (K) sont identiques.

7. Procédé selon l'une des revendications 1 à 6, comprenant une étape de chiffrement d'un bloc de données (BLi) ou du bloc de signature (BLS), à l'aide d'une clé de chiffrement, avant de l'émettre à l'extérieur du microcircuit.

8. Procédé selon la revendication 7, dans lequel la clé de chiffrement est identique à la première ou la seconde clé de signature.

9. Procédé selon l'une des revendications 1 à 8, dans lequel chaque bloc (BLi, BLS) est signé et/ou chiffré avec une clé de signature ou de chiffrement distincte des clés de signatures et/ou de chiffrement utilisées pour les autres blocs.

10. Procédé selon l'une des revendications 1 à 9, dans lequel chaque clé de signature (Ki) est générée à partir d'une donnée secrète obtenue par une fonction (PUF) non reproductible, sensiblement déterministe, non inversible et caractéristique du microcircuit, qui combinée à une fonction de correction d'erreur ou une fonction de moyennage, fournit toujours la même donnée secrète.

11. Procédé selon l'une des revendications 1 à 10, dans lequel la génération de chaque clé de signature comprend des étapes consistant à :

   générer une donnée aléatoire (RND) et une donnée de correction d'erreur (ECW) à partir de la donnée aléatoire,
   générer la clé de signature (K) à partir de la donnée aléatoire,
   obtenir une première donnée secrète (PN, PN1) à partir d'une fonction (PUF) non reproductible, sensiblement déterministe, non inversible et caractéristique du microcircuit, et
   combiner par une première fonction logique inversible la première donnée secrète et la donnée aléatoire, pour obtenir une donnée exportable (EXT, EXT1) à l'extérieur du microcircuit,
   la régénération de chaque clé de signature comprenant des étapes consistant à :

      obtenir une seconde donnée secrète (PN') à partir de la fonction caractéristique du microcircuit, et
      combiner par une seconde fonction logique inverse de la première fonction logique, la seconde donnée secrète et la donnée exportable,
      appliquer au résultat (RND') de la seconde fonction logique un traitement de correction d'erreur (ECC2) utilisant la donnée de correction d'erreur (ECW, ECW'), pour obtenir la donnée aléatoire, et
      générer la clé de signature à partir de la donnée aléatoire.

12. Procédé selon la revendication 11, dans lequel la génération de chaque clé de signature (K) comprend des étapes consistant à :

   obtenir une troisième donnée secrète (PN2) à partir de la fonction (PUF) caractéristique du microcircuit, et
   combiner par la première fonction logique, la troisième donnée secrète et la donnée de correction d'erreur (ECW), pour obtenir une seconde donnée exportable (EXT2),
   la régénération de chaque clé de signature comprenant des étapes consistant à :

      obtenir une quatrième donnée secrète (PN2') à partir de la fonction caractéristique du microcircuit, et
      combiner par la seconde fonction logique, la quatrième donnée secrète et la seconde donnée exportable, pour obtenir une donnée de correction d'erreur qui est utilisée par le traitement de correction d'erreur (ECC2), pour obtenir la donnée aléatoire (RND).

13. Procédé selon l'une des revendications 10 à 12, comprenant une étape de modification de bits dans les données secrètes (PN, PN', PN1, PN1', PN2, PN2') fournies par la fonction (PUF) caractéristique du microcircuit, par insertion de bits aléatoires ou inversion de bits dans les données secrètes, les modifications de bits dans les données secrètes ayant une étendue telle qu'elles peuvent être corrigées par la fonction de correction d'erreur.

**14.** Microcircuit comprenant un processeur (PRC) et une mémoire volatile (MEM2) dans lequel est mémorisé un programme exécuté par le processeur, le microcircuit étant configuré pour mettre en œuvre le procédé selon l'une des revendications 1 à 13.

**15.** Microcircuit selon la revendication 14, comprenant une capacité de mémorisation non volatile réinscriptible insuffisante pour mémoriser les programmes ou le système d'exploitation exécutés par le microcircuit.

**16.** Microcircuit selon la revendication 14 ou 15, comprenant un circuit (PUC) mettant en œuvre une fonction (PUF) non reproductible, sensiblement déterministe, non inversible et caractéristique du microcircuit.

**Patentansprüche**

**1.** Verwaltungsverfahren für den Speicher einer sicheren Mikroschaltung (SE, SE1), umfassend von der Mikroschaltung ausgeführte Schritte, bestehend aus:
Bilden eines Datenblocks (BLi) mit ausführbarem Code und/oder Daten, die in einem Speicher (MEM2, MEM3) der Mikroschaltung gespeichert und außerhalb der Mikroschaltung zu sichern sind, Berechnen einer Signatur (SGi) des Datenblocks mit Hilfe eines ersten Signaturschlüssels, Einfügen der berechneten Signatur des Datenblocks in einen Signaturblock (BLS), der mit Signaturen von Datenblöcken gebildet ist, die außerhalb der Mikroschaltung übertragen werden, Erhalten eines aktuellen Wertes von einem nichtflüchtigen Zählwerk (CNT) innerhalb der Mikroschaltung, Berechnen einer Signatur (SGG) des Signaturblocks, der dem aktuellen Wert des internen Zählwerks zugeordnet ist, mit Hilfe eines zweiten Signaturschlüssels und Übertragen des Datenblocks, des Signaturblocks und der Signatur des Signaturblocks außerhalb der Mikroschaltung.

**2.** Verfahren nach Anspruch 1, umfassend von der Mikroschaltung ausgeführte Schritte, bestehend aus:

Senden einer Anforderung eines Signaturblocks, als Reaktion darauf Empfangen eines Signaturblocks (BLS) mit einer Signatur (SGG), Berechnen einer Signatur (SGG') des Signaturblocks, der dem aktuellen Wert des internen Zählwerks (CNT) zugeordnet ist, mit Hilfe des zweiten Signaturschlüssels (K) und, wenn die berechnete Signatur der erhaltenen Signatur entspricht:
Bilden eines Datenblocks (BLi) mit ausführbarem Code und/oder Daten, die im flüchtigen Speicher (MEM2) der Mikroschaltung gespeichert und außerhalb der Mikroschaltung zu sichern sind, Berechnen einer Signatur (SGi) des Datenblocks, mit Hilfe des ersten Signaturschlüssels, Einfügen der berechneten Signatur des Datenblocks in den Signaturblock, Ändern des aktuellen Wertes des internen Zählwerks, Berechnen einer neuen Signatur des Signaturblocks, der dem neuen Wert des internen Zählwerks zugeordnet ist, mit Hilfe des zweiten Signaturschlüssels, und Übertragen des Datenblocks, des Signaturblocks und der neuen Signatur des Signaturblocks außerhalb der Mikroschaltung.

**3.** Verfahren nach Anspruch 2, umfassend die Schritte bestehend aus:
wenn die berechnete Signatur (SGG') des Signaturblocks (BLS) der empfangenen Signatur (SGG) entspricht:
Senden einer Anforderung eines Datenblocks (BLi), der außerhalb der Mikroschaltung gesichert ist, als Reaktion darauf Empfangen des angeforderten Datenblocks, Berechnen einer Signatur (SGi) des empfangenen Datenblocks mit Hilfe des ersten Signaturschlüssels und, wenn die berechnete Signatur des Datenblocks einer Signatur des im Signaturblock (BLS) befindlichen Datenblocks entspricht, Laden des Datenblocks in den flüchtigen Speicher (MEM2) der Mikroschaltung.

**4.** Verfahren nach einem der Ansprüche 1 bis 3, umfassend einen Schritt des Teilens des flüchtigen Speichers (MEM2) der Mikroschaltung in Datenblöcke (BL1-BLn), die außerhalb der Mikroschaltung gesichert werden können, in Verbindung mit einer Signatur (SG1-SGn) des Datenblocks, die im Signaturblock (BLS) gespeichert ist.

**5.** Verfahren nach einem der Ansprüche 1 bis 4, wobei der erste und der zweite Signaturschlüssel (K) aus einem nichtflüchtigen Speicher (MEM3) der Mikroschaltung gelesen oder aus einem geheimen Datum regeneriert werden, das von einer Schaltung (PUC, RNGN) der Mikroschaltung bereitgestellt wird.

**6.** Verfahren nach einem der Ansprüche 1 bis 5, wobei der erste und der zweite Signaturschlüssel (K) identisch sind.

**7.** Verfahren nach einem der Ansprüche 1 bis 6, umfassend einen Schritt des Verschlüsselns eines Datenblocks (BLi) oder des Signaturblocks (BLS) mit Hilfe eines Verschlüsselungsschlüssels vor dem Senden von diesen außerhalb der Mikroschaltung.

8. Verfahren nach Anspruch 7, wobei der Verschlüsselungsschlüssel zum ersten oder zweiten Signaturschlüssel identisch ist.

9. Verfahren nach einem der Ansprüche 1 bis 8, wobei jeder Block (BLi, BLS) mit einem Signaturschlüssel oder Verschlüsselungsschlüssel signiert und/oder verschlüsselt ist, der sich von den für die anderen Blöcke verwendeten Signatur- und/oder Verschlüsselungsschlüsseln unterscheidet.

10. Verfahren nach einem der Ansprüche 1 bis 9, wobei jeder Signaturschlüssel (Ki) aus einem geheimen Datum generiert wird, das durch eine nicht reproduzierbare, im Wesentlichen deterministische, nicht invertierbare und charakteristische Funktion (PUF) der Mikroschaltung erhalten wird, die, in Kombination mit einer Fehlerkorrekturfunktion oder einer Mittelungsfunktion, immer dasselbe geheime Datum bereitstellt.

11. Verfahren nach einem der Ansprüche 1 bis 10, wobei das Generieren jedes Signaturschlüssels Schritte umfasst, bestehend aus:
Generieren eines Zufallsdatums (RND) und eines Fehlerkorrekturdatums (ECW) aus dem Zufallsdatum, Generieren des Signaturschlüssels (K) aus dem Zufallsdatum, Erhalten eines ersten geheimen Datums (PN, PN1) von einer nicht reproduzierbaren, im Wesentlichen deterministischen, nicht invertierbaren und charakteristischen Funktion (PUF) der Mikroschaltung und Kombinieren, durch eine erste invertierbare Logikfunktion, des ersten geheimen Datums und des Zufallsdatums, um ein exportierbares Datum (EXT, EXT1) außerhalb der Mikroschaltung zu erhalten, wobei das Regenerieren jedes Signaturschlüssels folgende Schritte umfasst, bestehend aus:
Erhalten eines zweiten geheimen Datums (PN') aus der charakteristischen Funktion der Mikroschaltung und Kombinieren, durch eine zweite inverse Logikfunktion der ersten Logikfunktion, des zweiten geheimen Datums und des exportierbaren Datums, Anwenden einer Fehlerkorrekturverarbeitung (ECC2) auf das Ergebnis (RND') der zweiten Logikfunktion unter Verwendung des Fehlerkorrekturdatums (ECW, ECW'), um das Zufallsdatum zu erhalten, und Generieren des Signaturschlüssels aus dem Zufallsdatum.

12. Verfahren nach Anspruch 11, wobei das Generieren jedes Signaturschlüssels (K) die Schritte umfasst, bestehend aus:
Erhalten eines dritten geheimen Datums (PN2) aus der charakteristischen Funktion (PUF) der Mikroschaltung und Kombinieren, durch die erste Logikfunktion, des dritten geheimen Datums und des Fehlerkorrekturdatums (ECW), um ein zweites exportierbares Datum (EXT2) zu erhalten, wobei das Regenerieren jedes Signaturschlüssels Schritte umfasst, bestehend aus:
Erhalten eines vierten geheimen Datums (PN2') aus der charakteristischen Funktion der Mikroschaltung und Kombinieren, durch die zweite Logikfunktion, des vierten geheimen Datums und des zweiten exportierbaren Datums, um ein Fehlerkorrekturdatum zu erhalten, das von der Fehlerkorrekturverarbeitung (ECC2) verwendet wird, um das Zufallsdatum (RND) zu erhalten.

13. Verfahren nach einem der Ansprüche 10 bis 12, umfassend einen Schritt zum Ändern von Bits in den geheimen Daten (PN, PN', PN1, PN1', PN2, PN2'), die durch die charakteristische Funktion (PUF) der Mikroschaltung bereitgestellt werden, durch Einfügen von Zufallsbits oder Inversion von Bits in die geheimen Daten, wobei die Änderungen von Bits in den geheimen Daten einen solchen Umfang haben, dass sie durch die Fehlerkorrekturfunktion korrigiert werden können.

14. Mikroschaltung, umfassend einen Prozessor (PRC) und einen flüchtigen Speicher (MEM2), in dem ein vom Prozessor ausgeführtes Programm gespeichert ist, wobei die Mikroschaltung konfiguriert ist, um das Verfahren nach einem der Ansprüche 1 bis 13 zu implementieren.

15. Mikroschaltung nach Anspruch 14, umfassend eine wiederbeschreibbare nichtflüchtige Speicherkapazität, die nicht ausreicht, um die von der Mikroschaltung ausgeführten Programme oder das Betriebssystem zu speichern.

16. Mikroschaltung nach Anspruch 14 oder 15, umfassend eine Schaltung (PUC), die eine nicht reproduzierbare, im Wesentlichen deterministische, nicht invertierbare und charakteristische Funktion (PUF) der Mikroschaltung implementiert.

**Claims**

1. A method for managing the memory of a secure microcircuit (SE, SE1), comprising steps executed by the microcircuit of:

   forming a data block (BLi) with executable code and/or data stored in a memory (MEM2, MEM3) of the microcircuit, and to be backed up outside the microcircuit,
   calculating a signature (SGi) of the data block using a first signature key,
   inserting the calculated signature of the data block into a signature block (BLS) formed with signatures of data blocks sent outside the microcircuit,
   obtaining a current value of a non-volatile counter (CNT) internal to the microcircuit,
   calculating a signature (SGG) of the signature block associated with the current value of the internal counter, using a second signature key, and
   sending outside the microcircuit, the data block, the signature block and the signature of the signature block.

2. Method according to claim 1, comprising steps executed by the microcircuit of:

   sending a request for a signature block,
   receiving in response a signature block (BLS) together with a signature (SGG),
   calculating a signature (SGG') of the signature block associated with the current value of the internal counter (CNT), using the second signature key (K), and
   if the calculated signature corresponds to the signature received:

      forming a data block (BLi) with executable code and/or data stored in the volatile memory (MEM2) of the microcircuit, and to be backed up outside the microcircuit,
      calculating a signature (SGi) of the data block, using the first signature key,
      inserting the calculated signature of the data block into the signature block,
      changing the current value of the internal counter,
      calculating a new signature of the signature block associated with the new value of the internal counter, using the second signature key, and
      sending outside the microcircuit, the data block, the signature block and the new signature of the signature block.

3. Method according to claim 2, comprising steps of:
   if the calculated signature (SGG') of the signature block (BLS) corresponds to the signature received (SGG):

      sending a request for a data block (BLi) backed up outside the microcircuit,
      receiving in response the requested data block,
      calculating a signature (SGi) of the data block received, using the first signature key, and
      if the calculated signature of the data block corresponds to a signature of the data block located in the signature block (BLS), loading the data block into the volatile memory (MEM2) of the microcircuit.

4. Method according to one of claims 1 to 3, comprising a step of breaking down the volatile memory (MEM2) of the microcircuit into data blocks (BL1-BLn) which may be backed up outside the microcircuit, in association with a signature (SG1-SGn) of the data block, backed up in the signature block (BLS).

5. Method according to one of claims 1 to 4, wherein the first and second signature keys (K) are read in a non-volatile memory (MEM3) of the microcircuit or regenerated from a secret datum supplied by a circuit (PUC, RNGN) of the microcircuit.

6. Method according to one of claims 1 to 5, wherein the first and second signature keys (K) are identical.

7. Method according to one of claims 1 to 6, comprising a step of ciphering a data block (BLi) or the signature block (BLS), using a ciphering key, before sending it outside the microcircuit.

8. Method according to claim 7, wherein the ciphering key is identical to the first or the second signature key.

9. Method according to one of claims 1 to 8, wherein each block (BLi, BLS) is signed and/or ciphered with a signature or ciphering key different from the signature and/or ciphering keys used for the other blocks.

10. Method according to one of claims 1 to 9, wherein each signature key (Ki) is generated from a secret datum obtained by an unclonable, substantially deterministic, non-invertible function (PUF) characteristic of the microcircuit, which, when combined with an error correction function or an averaging function, always provides the same secret datum.

11. Method according to one of claims 1 to 10, wherein the generation of each signature key comprises steps of:

   generating a random datum (RND) and an error correction datum (ECW) from the random datum,
   generating the signature key (K) from the random datum,
   obtaining a first secret datum (PN, PN1) from an unclonable, substantially deterministic, non-invertible function (PUF) characteristic of the microcircuit, and
   combining by a first invertible logic function the first secret datum and the random datum, to obtain a datum exportable (EXT, EXT1) outside the microcircuit,
   the regeneration of each signature key comprising steps of:

      obtaining a second secret datum (PN') from the function characteristic of the microcircuit, and
      combining by a second logic function that is the inverse of the first logic function, the second secret datum and the exportable datum,

   applying to the result (RND') of the second logic function an error correction process (ECC2) using the error correction datum (ECW, ECW'), to obtain the random datum, and
   generating the signature key from the random datum.

12. Method according to claim 11, wherein the generation of each signature key (K) comprises steps of:

   obtaining a third secret datum (PN2) from the function (PUF) characteristic of the microcircuit, and
   combining by the first logic function, the third secret datum and the error correction datum (ECW), to obtain a second exportable datum (EXT2),
   the regeneration of each signature key comprising steps of:

      obtaining a fourth secret datum (PN2') from the function characteristic of the microcircuit, and
      combining by the second logic function, the fourth secret datum and the second exportable datum, to obtain an error correction datum that is used by the error correction process (ECC2), to obtain the random datum (RND).

13. Method according to one of claims 10 to 12, comprising a step of changing bits in the secret data (PN, PN', PN1, PN1', PN2, PN2') supplied by the function (PUF) characteristic of the microcircuit, by inserting random bits or inverting bits into the secret data, the extent of the bit changes in the secret data being such that they can be corrected by the error correction function.

14. A microcircuit comprising a processor (PRC) and a volatile memory (MEM2) in which a program executed by the processor is stored, the microcircuit being configured to implement the method according to one of claims 1 to 13.

15. Microcircuit according to claim 14, comprising a rewritable, non-volatile storage capacity that is insufficient to store the programs or the operating system executed by the microcircuit.

16. Microcircuit according to claim 14 or 15, comprising a circuit (PUC) implementing an unclonable, substantially deterministic, non-invertible function (PUF) characteristic of the microcircuit.

Fig. 1

Fig. 2

Fig. 3

Fig. 4

Fig. 5

Fig. 6

Fig. 7

Fig. 8

Fig. 9

**RÉFÉRENCES CITÉES DANS LA DESCRIPTION**

**Documents brevets cités dans la description**

- WO 2009156302 A1